# FASCICULE DE BREVET EUROPEEN

(11) **EP 3 529 085 B1**
(45) Date de publication et mention de la délivrance du brevet: **07.04.2021**
(21) Numéro de dépôt: 17794022.8
(22) Date de dépôt: 20.10.2017
(51) Int. Cl.: B60C 9/20, B60C 9/18, B60C 9/24, B60C 11/00

(54) **PNEUMATIQUE À COUCHES DE TRAVAIL COMPRENANT UNE ARCHITECTURE OPTIMISÉE**
REIFEN MIT ARBEITSSCHICHTEN MIT VERBESSERTER ARCHITEKTUR
TYRE COMPRISING WORKING LAYERS HAVING AN IMPROVED ARCHITECTURE

(30) Priorité: 21.10.2016 FR 1660243
(43) Date de publication de la demande: 28.08.2019
(73) Titulaire: Compagnie Générale des Etablissements Michelin, 63000 Clermont-Ferrand (FR)
(72) Inventeur: ABINAL, Richard, 63040 Clermont-Ferrand Cedex 9 (FR); ALBOUY, Mathieu, 63040 Clermont-Ferrand Cedex 9 (FR); BRUNEAU, François-Xavier, 63040 Clermont-Ferrand Cedex 9 (FR); CHARREIRE, Cyril, 63040 Clermont-Ferrand Cedex 9 (FR); FEVRIER, Pierre, 63040 Clermont-Ferrand Cedex 9 (FR); PALLOT, Patrick, 63040 Clermont-Ferrand Cedex 9 (FR)
(74) Mandataire: Millanvois, Patrick Jacques Jean
(86) Numéro de dépôt international: PCT/FR2017/052885
(87) Numéro de publication internationale: WO 2018/073546

(56) Documents cités:
- EP-A1- 1 338 441
- EP-A2- 0 719 659
- WO-A1-2012/069603
- WO-A1-2013/053879
- FR-A- 1 290 231
- JP-A- S63 151 503
- JP-A- 2011 031 841
- JP-A- 2012 201 126

## Description

### DOMAINE DE L'INVENTION

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie, « pour chaque méridien, radialement intérieur dans la limite des coordonnées axiales délimitées par ». Ainsi « les points d'une couche de travail à l'aplomb d'une rainure » désignent pour chaque méridien, l'ensemble des points de la couche de travail radialement intérieurs à la rainure dans la limite des coordonnées axiales délimitées par la rainure.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est la surface de roulement et dont la plus radialement intérieure est appelée surface de fond de sculpture. La surface de fond de sculpture, ou surface de fond, est définie comme la surface translatée de la surface de roulement radialement vers l'intérieur d'une distance radiale égale à la profondeur de sculpture. Il est courant que cette profondeur soit dégressive sur les portions circonférentielles les plus axialement extérieures, appelées épaules, de la bande de roulement.

De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par le point le plus radialement extérieur de chaque élément de renforcement, de chaque méridien. Pour toute couche d'éléments de renforcement d'armature de sommet, de travail, ou autre, une surface continue, dite surface radialement intérieure (SRI) de la dite couche, passe par les points le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée profondeur de sculpture D.

### ETAT DE LA TECHNIQUE

Un pneumatique doit répondre à de multiples critères de performance portant sur des phénomènes comme l'usure, l'adhérence sur différents types de sol, la résistance au roulement, le comportement dynamique. Ces critères de performance conduisent parfois à des solutions s'opposant à d'autres critères. Ainsi pour une bonne performance en adhérence, le matériau caoutchouteux de la bande de roulement doit être dissipatif et mou. En revanche pour obtenir un pneumatique performant en comportement, notamment en réponse dynamique sur un effort transversal au véhicule et donc principalement dans l'axe du pneumatique, le pneumatique doit avoir un niveau de rigidité, notamment sous effort transversal, suffisamment élevé. Pour une dimension donnée, la rigidité du pneumatique dépend de la rigidité des différents éléments du pneumatique que sont la bande de roulement, l'armature de sommet, les flancs et les bourrelets. La rigidification de la bande de roulement est traditionnellement obtenue soit à travers la rigidification des matériaux caoutchouteux, soit à travers la diminution de la profondeur de la sculpture ou de la diminution du niveau d'entaillement de la sculpture.

Pour pallier le problème, les fabricants de pneumatiques ont par exemple changé le matériau caoutchouteux en le rigidifiant notamment par des fibres, comme mentionné dans les documents FR 3 014 442 et FR 2 984 230.

Ces solutions ne sont pas toujours satisfaisantes. Diminuer la profondeur sculpture limite la performance en usure et en adhérence sur route mouillée. Rigidifier le matériau caoutchouteux limite les capacités d'adhérence sur sol mouillé et sol sec, et augmente aussi les émissions sonores du pneumatique en roulage. Réduire le volume de creux de la sculpture réduit les capacités d'adhérence sur sol mouillé et plus particulièrement en cas de forte hauteur d'eau au sol. Il est par ailleurs important de maintenir une certaine épaisseur de matériaux caoutchouteux entre la face de fond des découpures, rainures ou sillons et les éléments de renforcement de l'armature de sommet la plus radialement extérieure pour garantir l'endurance du pneumatique.

D'autres solutions ont été divulguées dans JP2012201126, JP2011031841, EP0719659, JPS63151503, EP1338441 et WO2013/053879.

### RESUME DE L'INVENTION

L'objectif principal de la présente invention est donc d'augmenter la performance en comportement du pneumatique, en améliorant ses performances en adhérence et plus particulièrement d'adhérence mouillé, en résistance au roulement, sans modifier ses performances en usure et en endurance du sommet.

Cet objectif est atteint par un pneumatique comprenant :
- une bande de roulement destinée à entrer en contact avec un sol par l'intermédiaire d'une surface de roulement comprenant des rainures,
- une rainure formant un espace débouchant sur la surface de roulement et étant délimitée par deux faces latérales principales reliées par une face de fond,
- une rainure ayant une largeur W définie par la distance moyenne entre les deux faces latérales et une profondeur D définie par la distance radiale maximale entre la surface de roulement et la face de fond,
- au moins une rainure, dite majeure, ayant une largeur W au moins égale à 1 mm et une profondeur D au moins égale à 4 mm,
- le pneumatique comprenant en outre une armature de sommet, radialement intérieure à la bande de roulement, comprenant une armature de travail,
- l'armature de travail comprenant au moins une couche de travail, la au moins une couche de travail comprenant une couche de travail la plus radialement extérieure,
- la couche de travail la plus radialement extérieure s'étendant radialement depuis une surface radialement extérieure (SRE) jusqu'à une surface radialement intérieure (SRI),
- la couche de travail la plus radialement extérieure comprenant des éléments de renforcement au moins partiellement métalliques enrobés par un matériau élastomérique, continus d'un bord axialement extérieur de la couche de travail au bord axialement extérieur opposé, parallèles entre eux et formant avec la direction circonférentielle (XX') du pneumatique, un angle orienté dont la valeur absolue est au moins égale à 15° et au plus égale à 50°,
- la couche de travail la plus radialement extérieure comprenant au moins une ondulation,
- la au moins une ondulation de la couche de travail la plus radialement extérieure étant telle que, sur au moins 10% de la surface radialement extérieure (SRE) de ladite couche de travail, la distance radiale (do) entre la surface radialement extérieure (SRE) de la couche de travail la plus radialement extérieure et la surface de roulement est inférieure d'au moins 1 mm à la distance radiale (dc) entre la surface radialement extérieure (SRE) de la couche de travail la plus radialement extérieure et la surface de roulement, distance à l'aplomb du centre de la face de fond de la rainure majeure la plus proche de ladite ondulation,
- la au moins une ondulation de la couche de travail la plus radialement extérieure est telle que la portion de la couche de travail de l'ondulation est radialement extérieure aux points de la couche de travail à l'aplomb du centre de la face de fond de la rainure majeure la plus proche de ladite ondulation.
- la distance radiale minimale (du) entre la surface radialement extérieure (SRE) de la couche la plus radialement extérieure de l'armature de sommet et la surface de roulement est au plus égale à la profondeur D de la rainure majeure la plus proche augmentée de 2 mm

Pour améliorer la réponse dynamique sous effort transversal, il faut donc rigidifier le pneumatique dans sa composante axiale qui est, pour l'armature de sommet, essentiellement due à la rigidité des couches de travail métalliques et à la distance entre celles-ci et la surface de roulement. En effet les couches de travail métalliques sont rigides en traction et en compression de par leurs matériaux. Elles sont également rigides en cisaillement de par leurs angles avec la direction circonférentielle et leur couplage assuré par la faible épaisseur de matériaux caoutchouteux entre elles.

En revanche les matériaux entre les couches de travail et la surface de roulement travaillent en cisaillement en cas d'effort transversal. Plus l'épaisseur radiale de ces matériaux est importante moins cette partie du sommet est rigide, plus la performance en réponse dynamique sous effort axial diminue. Il faut donc réduire cette distance. Cependant, il faut maintenir la profondeur de sculpture D afin de préserver les performances en usure et en adhérence sur sol mouillé du pneumatique.

Par ailleurs il faut préserver la distance radiale d1, dite profondeur de sous-creux, entre la surface radialement extérieure (SRE) de la couche de travail la plus radialement extérieure et la face de fond des rainures majeures, pour protéger les éléments de renforcement des différentes couches de travail des perforations. Une solution à ce problème consiste à conserver inchangées la profondeur de sculpture D et la profondeur de sous-creux d1 mesurées à l'aplomb des rainures majeures, et à diminuer la distance radiale do entre les couches de travail et la surface de roulement à l'aplomb des portions de la bande de roulement dénuées de rainures majeures.

Compte-tenu du fait que la surface de roulement d'un pneumatique est sensiblement cylindrique, cette solution revient à onduler radialement les couches de travail, selon des ondulations qui peuvent être identiques pour tout plan méridien, ou pas, selon la sculpture et le choix du concepteur. Cette solution va à l'encontre des modes de fabrication des pneumatiques pour lesquels les couches de travail sont posées sur des formes sensiblement cylindriques, les couches de travail présentant dans le plan méridien, pour les pneumatiques de l'état de la technique, une courbure régulière sans point d'inflexion. Ainsi le sommet est constitué selon l'état de l'art, d'empilements de couches de matériaux sensiblement parallèles - il est courant de découpler très localement certaines couches aux extrémités des éléments de renforcement qui les constituent. Ces couches sont disposées à un rayon sensiblement constant. Selon l'invention, ces couches sont disposées avec des variations de rayons sur une surface minimale pour assurer les avantages escomptés et présentent au moins un point d'inflexion dans le plan méridien.

Les pneumatiques pour motocyclette ne sont généralement pas disposées à un rayon sensiblement constant. Cependant pour ces pneumatiques, les couches de matériaux du sommet sont disposées selon une courbe continue, convexe. L'invention pourrait s'appliquer également sur ces pneumatiques, les ondulations créant des zones de concavité plus importante et de convexité autour de la courbe continue du pneumatique selon l'état de l'art.

Par ailleurs, onduler des couches d'éléments de renforcement peut sembler sensibiliser le pneumatique à des variations de la géométrie de la surface de roulement dégradant les performances comme la tenue à l'usure irrégulière, le balourd, etc. Néanmoins la solution a de très bonnes performances sur ces critères.

De plus onduler des couches d'éléments de renforcement soumis à des efforts de compression va à l'encontre des préconisations pour lutter contre le flambement des structures. En effet, créer une discontinuité de rayon de courbure revient à créer des surcontraintes où pourrait avoir lieu le flambement. Cependant dans le pneumatique, les efforts sont très localisés de sorte qu'une partie du sommet est en tension quand une autre est en compression, à une échelle très inférieure à celle des ondulations. Ainsi les ondulations pratiquées dans les limites de l'invention, ne nuisent pas à l'endurance du pneumatique.

Pour éviter tout problème d'endurance du sommet lié aux chocs lorsque le pneumatique roule sur une route où est présent un obstacle, ou à la fatigue du matériau caoutchouteux en extrémité des éléments de renforcement, il est important que les éléments de renforcement de la couche de travail soient continus d'un bord axialement extérieur de la couche de travail au bord axialement extérieur opposé. Les éléments de renforcement de la couche de travail comportent un ou plusieurs fils métalliques tressés ou non. Il est important que ces fils soient très majoritairement continus dans toute la largeur de la couche de travail de manière à ce que la couche de travail soit elle-même continue.

L'expérience montre que pour améliorer la performance en tenue dynamique sous effort transversal, un des critères suffisant en lui-même est de diminuer la distance (do) entre la couche de travail la plus radialement extérieure et la surface de roulement. Ceci permet de réduire les épaisseurs cisaillées de matériaux caoutchouteux de la bande de roulement et de réduire la production de chaleur due à l'hystérèse de ces matériaux. Ces effets sont bénéfiques à la fois vis-à-vis de la rigidité de la bande de roulement qui dépend de la température, et vis-à-vis des performances en résistance au roulement et en endurance. L'ondulation de la couche de travail permet en plus d'accroitre la rigidité axiale des pneumatiques par l'augmentation de l'inertie de flexion sur chant du sommet, ce qui induit une amélioration sensible la performance en comportement. Par ailleurs, dans certains pneumatiques, le sommet ne comprend qu'une seule couche de travail et l'invention fonctionne également dans ce cas.

Cette distance (do) est diminuée en créant au moins une ondulation dans la couche de travail, de sorte que cette ondulation ou partie ondulée de la couche de travail soit radialement extérieure à la partie de la couche de travail à l'aplomb de la rainure majeure la plus proche de ladite ondulation. Il ne s'agit pas de considérer comme ondulée une couche de travail non ondulée mais respectant le critère de la diminution de la distance do par une diminution de la profondeur de sculpture sur une zone donnée. Cette caractéristique est par ailleurs connue notamment pour des pneumatiques pour des véhicules de tourisme dont la profondeur sculpture est plus faible sur les bords axialement extérieurs du pneumatique, dites épaules, que dans les rainures majeures les plus proches. Dans les pneumatiques selon l'état de la technique, dans la partie aux épaules où la distance radiale (do) diminue, la couche de travail est soit au même rayon, soit radialement intérieure aux parties de la même couche de travail à l'aplomb de la rainure majeure la plus proche.

L'invention fonctionne également en positionnant une ou des ondulations dans une ou des parties d'une ou des épaules du pneumatique.

Le sous-creux (d1) doit être conservé dans les rainures majeures. Les rainures mineures ou les incisions sont moins sensibles aux perforations et agressions par des obstacles, car elles sont protégées par le matériau caoutchouteux leur donnant leur caractéristique technique de rainure de faible profondeur ou de faible largeur.

Les couches de faibles rigidités, proportionnellement aux couches de travail, comme les couches de protection, métalliques ou non, les couches de frettages, comportant des éléments de renforcement formant, avec la direction circonférentielle (XX') du pneumatique, un angle B au plus égal à 10° en valeur absolue, n'ont pas les rigidités en compression et en cisaillement suffisantes, en raison de leurs matériaux parfois textile, de leurs angles de pose, pour qu'une ondulation seulement de ces dernières, apporte au problème une solution au même niveau d'efficacité que l'invention. Ces couches de protection ou de frettage sont optionnelles dans un pneumatique et ne conditionnent pas l'intérêt de la solution.

Il apparaît qu'une ondulation de 10% de la surface radialement extérieure de la couche de travail est suffisant pour mesurer un gain de performance en dynamique sous effort transversal. L'amplitude de cette ondulation doit être au moins égale à 1 mm pour avoir des effets significatifs à l'échelle du pneumatique. Ainsi la distance radiale (do) entre la surface radialement extérieure (SRE) de la couche de travail la plus radialement extérieure et la surface de roulement, est inférieure d'au moins 1 mm à la distance radiale (dc) entre la surface radialement extérieure (SRE) de la couche de travail la plus radialement extérieure et la surface de roulement, distance à l'aplomb du centre de la face de fond de la rainure majeure la plus proche de ladite ondulation.

La solution optimale prend en compte les caractéristiques du pneumatique et possiblement du véhicule. Une optimisation peut être menée en fonction du caractère directionnel du pneumatique, de son asymétrie, du carrossage du véhicule.

Préférentiellement sur au moins 10%, préférentiellement au moins 20% et au plus 85%, de la surface radialement extérieure (SRE) de la couche de travail la plus radialement extérieure, la distance radiale (do) entre la surface radialement extérieure (SRE) de la couche de travail la plus radialement extérieure et la surface de roulement est inférieure d'au moins 1.5 mm, préférentiellement 2 mm, à la distance radiale (dc) entre la surface radialement extérieure (SRE) de la couche de travail la plus radialement extérieure et la surface de roulement, distance à l'aplomb du centre de la face de fond de la rainure majeure la plus proche de ladite ondulation. Les paramètres de conception permettant le réglage de la dynamique sous effort transverse important, au moins de l'ordre de 50% de la charge nominale du pneumatique, sont :
- l'étendue des ondulations de la couche de travail la plus radialement extérieure, sachant que le taux d'entaillement de la sculpture, rarement inférieur à 15%, la limite à au plus 85% (100%-15%). Plus l'ondulation est étendue plus le pneumatique est rigide sous effort transversal, et plus il est performant en résistance au roulement.
- L'amplitude de l'ondulation au moins égale à 1 mm mais limitée à 5 mm en raison des rayons de courbures à imposer aux couches de travail métalliques, rigides et donc peu déformables.

Une solution préférée est donc que sur au moins 10%, préférentiellement au moins 20% et au plus 85%, de la surface radialement extérieure (SRE) de la couche de travail la plus radialement extérieure, la distance radiale (do) entre la surface radialement extérieure (SRE) de la couche de travail la plus radialement extérieure et la surface de roulement est inférieure d'au plus 5 mm, préférentiellement d'au plus 3 mm à la distance radiale (dc) entre la surface radialement extérieure (SRE) de la couche de travail la plus radialement extérieure et la surface de roulement, distance à l'aplomb du centre de la face de fond de la rainure majeure la plus proche de ladite ondulation.

Pour une performance optimale en perforation et agression du sommet sans pénaliser la résistance au roulement, la distance radiale (d1) entre la surface radialement extérieure (SRE) de la couche de travail la plus radialement extérieure et la face de fond des rainures majeures est au moins égale à 1 mm et au plus égale à 5 mm, préférentiellement au moins égale à 2 mm et au plus égale à 4 mm. En deçà des limites inférieures, le pneumatique pourrait être trop sensible aux agressions. Au-delà des limites supérieures, la résistance au roulement du pneumatique serait pénalisée.

Il est avantageux que la bande de roulement, par exemple une rainure majeure de la bande de roulement, comprenne au moins un témoin d'usure, et que la distance radiale minimale (du) entre la surface radialement extérieure (SRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement la distance radiale minimale (du) entre la surface radialement extérieure (SRE) de la couche la plus radialement extérieure de l'armature de sommet et la surface de roulement est au plus égale à la profondeur D de la rainure majeure la plus proche augmentée de 2 mm et au moins égale à la profondeur D de la rainure majeure la plus proche diminuée de 2 mm. Cette solution permet un positionnement idéal de la couche d'éléments de renforcement la plus radialement extérieure de l'armature de sommet et la surface de roulement. La distance radiale minimale (du) entre la surface radialement extérieure (SRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'une rainure majeure est au moins égale à 6 mm, et au plus égale à 20 mm. Les profondeurs de sculpture entre 6 et 10 mm permettent un bon compromis entre les performances en usure et en résistance au roulement dans de nombreux pneumatiques de tourisme. Les profondeurs de sculpture entre 10 et 20 mm sont intéressantes pour les mêmes compromis dans les pneumatiques pour véhicules portant de lourdes charges. L'invention n'est pas limitée à des pneumatiques d'un usage particulier.

Dans le cas où la couche d'éléments de renforcement la plus radialement extérieurs est une couche de frettage, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une solution préférée est qu'au moins une gomme de bourrage ayant une épaisseur radiale au moins égale à 0.3 mm est positionnée à l'aplomb de toute ondulation de la couche de travail la plus radialement extérieure. Ceci afin de permettre l'ondulation des nappes à la fabrication et à la cuisson. Ces gommes de bourrages peuvent être présentes sur la totalité de la circonférence du pneumatique ou disposées dans certaines portions du pneumatique selon les besoins. Il est possible de disposer plusieurs gommes de bourrage à l'aplomb de la ou des ondulations à différentes valeurs de rayons avec différentes propriétés en fonction du cahier des charges du pneumatiques. Si une seule gomme de bourrage est disposée, son épaisseur maximale est approximativement égale, pour une ondulation donnée, à la distance radiale entre le point le plus radialement extérieur de la surface radialement extérieure de la couche de travail la plus radialement extérieure au niveau de l'ondulation et la surface radialement extérieure de la couche de travail la plus radialement extérieure à l'aplomb du centre de la face de fond de la rainure majeure la plus proche de ladite ondulation.

Il est avantageux que, la bande de roulement étant constituée par un mélange caoutchouteux, la gomme de bourrage, disposée à l'aplomb de la ou des ondulations, soit un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du matériau caoutchouteux constitutif de la bande de roulement, mesurée à une température de 10°C et sous une contrainte de 0.7 MPa à 10 Hz. Pour un matériau de bourrage de même hystérèse, le gain en résistance au roulement est donné seulement par la diminution des sollicitations en cisaillement que ce matériau subit. Le matériau de bourrage ne subissant pas les mêmes contraintes que le matériau caoutchouteux constitutif de la bande de roulement, il est possible de modifier ses caractéristiques de manière à améliorer davantage la résistance au roulement. 30% de baisse d'hystérèse amène un gain significativement plus élevé pour l'invention.

Il est préféré que l'armature de sommet consiste en 2 nappes de travail ayant des angles opposés et une nappe de frettage, comme de nombreuses architectures de sommet actuelles.

### BREVE DESCRIPTION DES DESSINS

Les caractéristiques et autres avantages de l'invention seront mieux compris à l'aide des figures 1 à 3, les dites figures n'étant pas représentées à l'échelle mais de façon simplifiée, afin de faciliter la compréhension de l'invention :
- La figure 1 est une partie de pneumatique, en particulier son architecture et sa bande de roulement.
- la figure 2 représente une coupe méridienne du sommet d'un pneumatique selon l'invention et illustre les différentes distances radiales, du, do, d1, D, df, dc et une gomme de bourrage propre à créer une ondulation de la couche de travail la plus radialement extérieure.
- la figure 3 représente une portion de la surface de roulement délimitée circonférentiellement et axialement par des rainures majeures (24) délimitant également une ondulation (412) de la couche de travail la plus radialement extérieure (41) pour un pneumatique n'ayant que deux couches de travail (41,42). Elle illustre la possibilité d'agencer, à l'aplomb de l'ondulation (412), plusieurs gommes de bourrage (6), dont les matériaux peuvent avoir des propriétés différentes en fonction des besoins spécifiques liées à leurs positions radiales, axiales et circonférentielles respectives.

### DESCRIPTION DETAILLEE DES DESSINS

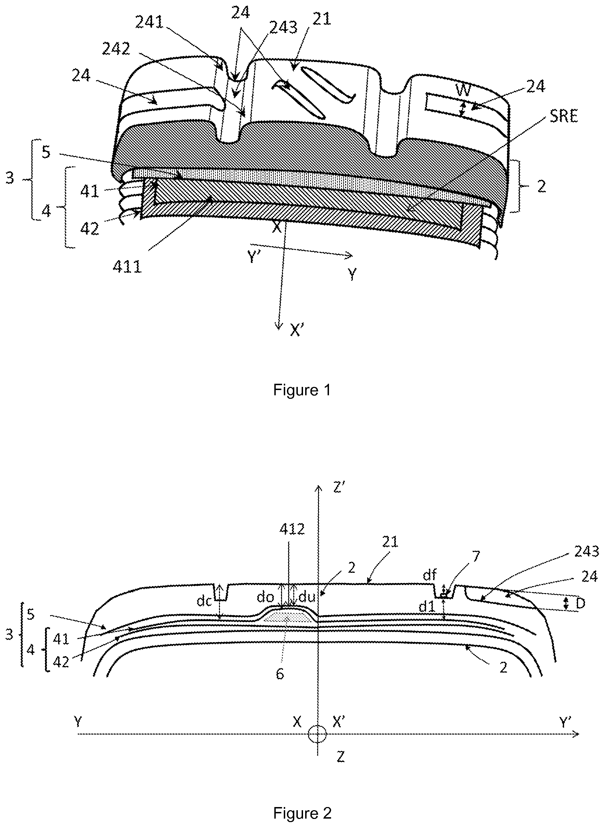

La figure 1 représente une vue en perspective d'une partie du sommet d'un pneumatique. A chaque plan méridien est associé un repère cartésien (XX', YY', ZZ'). Le pneumatique comporte une bande de roulement 2 destinée à entrer en contact avec un sol par l'intermédiaire d'une surface de roulement 21. Dans la bande de roulement, sont disposées des rainures 24 de largeur W possiblement différentes d'une rainure à l'autre, ayant chacune des profils principaux 241 et 242 et une face de fond 243. Le pneumatique comprend en outre une armature de sommet 3 comprenant une armature de travail 4 et ici pour l'exemple, une armature de frettage 5. L'armature de travail comprend au moins une couche de travail et ici pour l'exemple deux couches de travail 41 et 42 comprenant chacune des éléments de renforcement parallèles entre eux. Est représentée également la surface radialement extérieure (SRE) de la couche de travail (41) la plus radialement extérieure.

La figure 2 représente schématiquement la coupe méridienne du sommet du pneumatique selon l'invention. Elle illustre en particulier une ondulation de la couche de travail la plus radialement extérieure (41) et une gomme de bourrage (6) disposée à l'aplomb de celle-ci. La figure 2 illustre également les distances radiales suivantes :
- D : la profondeur d'une rainure, distance radiale maximale entre la surface de roulement (21) et la face de fond (243) de la rainure,
- dc : distance radiale entre la surface radialement extérieure (SRE) de la couche de travail (41) la plus radialement extérieure et la surface de roulement (21), distance à l'aplomb du centre de la face de fond (243) de la rainure majeure (24) la plus proche de ladite ondulation (412),
- do : la distance radiale entre la surface radialement extérieure (SRE) de la couche de travail (41) la plus radialement extérieure et la surface de roulement au niveau de l'ondulation (412),
- du : distance radiale minimale (du) entre la surface radialement extérieure (SRE) de la couche la plus radialement extérieure de l'armature de sommet (3) et la surface de roulement (21),
- df : la distance radiale entre la surface de roulement (21) et le point le plus radialement extérieur du témoin d'usure (7),
- d1 : la distance entre la surface radialement extérieure (SRE) de la couche de travail la plus radialement extérieure (41) et la face de fond (243) des rainures majeures (24).

Une coupe méridienne du pneumatique est obtenue par découpage du pneumatique selon deux plans méridiens. Cette coupe sert à déterminer les différentes distances radiales, le centre des faces de fond des rainures et des sillons.

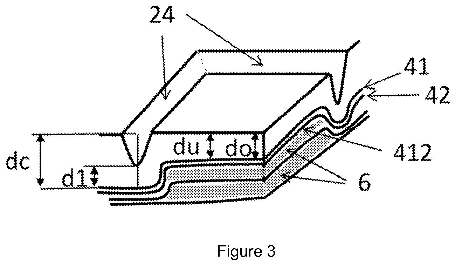

La figure 3 représente une ondulation 412 de la couche de travail 41 la plus radialement extérieure d'un sommet dénué de couche de frettage ou de protection de sorte qu'ici, do est égal à du. Les ondulations sont limitées axialement et circonférentiellement, à un motif de la sculpture. Ces motifs peuvent se répéter dans la sculpture du pneumatique avec ou sans ondulations de la couche de travail la plus radialement extérieure à leurs aplombs. La somme des aires des surfaces des ondulations doit au moins représenter 10% de la surface totale de la couche de travail la plus radialement extérieure pour que l'effet soit intéressant. La figure 3 montre également comment, il est possible d'obtenir une ondulation par la pose de plusieurs gomme de bourrage 6 entre différentes couches d'éléments de renforcement de l'armature de sommet et ce afin, par exemple, de limiter les rayons de courbure des éléments de renforcement des différentes couches.

L'invention a été réalisée sur un pneumatique A de dimension 305/30 ZR20 destiné à équiper un véhicule de tourisme. Les profondeurs D des rainures de la sculpture sont comprises entre 4 et 7 mm, pour des largeurs W variant entre 4 et 15 mm. L'armature sommet est composée de deux couches de travail dont les éléments de renforcement font un angle de + ou - 38° avec la direction circonférentielle et d'une couche de frettage dont les éléments de renforcement font un angle de + ou - 3° avec la direction circonférentielle. Les éléments de renforcement de la couche de travail, sont des câbles métalliques continus. La couche de travail la plus radialement extérieure est ondulée sur 50% de sa surface radialement extérieure. Les ondulations ont des distances radiales do entre la surface radialement extérieure (SRE) de la couche de travail (41) la plus radialement extérieure et la surface de roulement au niveau des ondulations (412) supérieure d'1 mm aux distances radiales (dc) entre la surface radialement extérieure (SRE) de la couche de travail (41) la plus radialement extérieure et la surface de roulement (21), distances à l'aplomb du centre de la face de fond des rainures majeures (24) les plus proches des dites ondulations (412). Sur 20% de sa surface radialement extérieure, les distances radiales do sont supérieures ou égales de 2 mm aux distances radiales (dc). La distance radiale (d1) entre la surface radialement extérieure (SRE) de la couche de travail la plus radialement extérieure (41) et la face de fond (243) des rainures majeures (24), est comprise entre 2 mm et 3,5 mm.

Les pneumatiques A ont été comparés avec les pneumatiques B de même dimension, possédant les mêmes caractéristiques à cela près que les couches de travail n'étaient pas ondulées.

Le mélange de bourrage utilisé pour créer les ondulations, a une perte dynamique tanδ1, mesurée à une température de 10°C et sous une contrainte de 0.7 MPa à 10 Hz, inférieure de 60% à celle du matériau caoutchouteux constitutif de la bande de roulement.

Le gain en résistance au roulement de l'invention a été évalué sur une machine standard pour des mesures normalisées ISO 2850 :2009. Les tests montrent un gain de plus 5% par rapport au pneumatique B de référence.

Par ailleurs, une mesure de la caractéristique Dz du modèle de comportement des pneumatiques, dit Pacejka, bien connue de l'homme de l'art, montre une augmentation de cette caractéristique pour une pression à 3.6b à chaud de 15%. Le gain en adhérence sol sec varie entre 1 et 5% selon les conditions de sollicitation.

Les pneumatiques ont également été montés sur un véhicule de type sportif et testés sur un circuit virageux propre à générer des efforts de transversaux importants. Un pilote professionnel, formé à l'évaluation des pneumatiques, compare les pneumatiques A selon l'invention et les pneumatiques B selon l'état de la technique et suivant un processus d'essais rigoureux, dans les mêmes conditions de température, de condition de sol de roulage, sans connaître les caractéristiques des pneumatiques testés, en répétant la mesure. Le pilote note les pneumatiques. Dans tous les essais effectués, les pneumatiques A selon l'invention surclasse les pneumatiques B en terme de comportement véhicule, tenue de route, sur sol sec et en terme d'adhérence. Par ailleurs la performance de comportement est plus constante au cours d'un test de comportement sur véhicule avec un pneumatique selon l'invention qu'avec un pneumatique selon l'état de la technique.

## Revendications

1. Pneumatique (1), comprenant :
• une bande de roulement (2) destinée à entrer en contact avec un sol par l'intermédiaire d'une surface de roulement (21) comprenant des rainures (24),
• une rainure (24) formant un espace débouchant sur la surface de roulement (21) et étant délimitée par deux faces latérales principales (241, 242) reliées par une face de fond (243),
• une rainure (24) ayant une largeur W définie par la distance moyenne entre les deux faces latérales (241, 242) et une profondeur D définie par la distance radiale maximale entre la surface de roulement (21) et la face de fond (243),
• au moins une rainure (24), dite majeure, ayant une largeur W au moins égale à 1 mm et une profondeur D au moins égale à 4 mm,
• le pneumatique (1) comprenant en outre une armature de sommet (3), radialement intérieure à la bande de roulement (2), comprenant une armature de travail (4),
• l'armature de travail (4) comprenant au moins une couche de travail (41, 42), la au moins une couche de travail (41, 42) comprenant une couche de travail (41) la plus radialement extérieure (41),
• la couche de travail (41) la plus radialement extérieure s'étendant radialement depuis une surface radialement intérieure jusqu'à une surface radialement extérieure (SRE),
• la couche de travail (41) la plus radialement extérieure comprenant des éléments de renforcement (411), continus d'un bord axialement extérieur de la couche de travail au bord axialement extérieur opposé, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°, la couche de travail (41) la plus radialement extérieure comprenant au moins une ondulation (412), la au moins une ondulation (412) de la couche de travail (41) la plus radialement extérieure étant telle que la portion de la couche de travail (41) de l'ondulation (412) est radialement extérieure aux points de la couche de travail (41) à l'aplomb du centre de la face de fond (243) de la rainure majeure (24) la plus proche de ladite ondulation (412),
**caractérisé en ce que** la au moins une ondulation (412) de la couche de travail (41) la plus radialement extérieure est telle que, sur au moins 10% de la surface radialement extérieure (SRE) de ladite couche de travail (41), la distance radiale (do) entre la surface radialement extérieure (SRE) de la couche de travail (41) la plus radialement extérieure et la surface de roulement (21) est inférieure d'au moins 1 mm à la distance radiale (dc) entre la surface radialement extérieure (SRE) de la couche de travail (41) la plus radialement extérieure et la surface de roulement (21), distance à l'aplomb du centre de la face de fond (243) de la rainure majeure (24) la plus proche de ladite ondulation (412),
**et en ce que** la distance radiale minimale (du) entre la surface radialement extérieure (SRE) de la couche la plus radialement extérieure de l'armature de sommet (3) et la surface de roulement (21) est au plus égale à la profondeur D de la rainure majeure (24) la plus proche augmentée de 2 mm.

2. Pneumatique selon la revendication 1 **dans lequel** sur au moins 10%, préférentiellement au moins 20% et au plus 85%, de la surface radialement extérieure (SRE) de la couche de travail (41) la plus radialement extérieure, la distance radiale (do) entre la surface radialement extérieure (SRE) de la couche de travail (41) la plus radialement extérieure et la surface de roulement (21) est inférieure d'au moins 1.5 mm, préférentiellement 2 mm, à la distance radiale (dc) entre la surface radialement extérieure (SRE) de la couche de travail (41) la plus radialement extérieure et la surface de roulement (21), distance à l'aplomb du centre de la face de fond (243) de la rainure majeure (24) la plus proche de ladite ondulation (412).

3. Pneumatique selon l'une ou l'autre des revendications précédentes **dans lequel** sur au moins 10%, préférentiellement au moins 20% et au plus 85%, de la surface radialement extérieure (SRE) de la couche de travail (41) la plus radialement extérieure, la distance radiale (do) entre la surface radialement extérieure (SRE) de la couche de travail (41) la plus radialement extérieure et la surface de roulement (21) est inférieure d'au plus 5 mm, préférentiellement d'au plus 3 mm à la distance radiale (dc) entre la surface radialement extérieure (SRE) de la couche de travail (41) la plus radialement extérieure et la surface de roulement (21), distance à l'aplomb du centre de la face de fond (243) de la rainure majeure (24) la plus proche de ladite ondulation (412).

4. Pneumatique selon l'une quelconque des revendications précédentes dans lequel la distance radiale (d1) entre la surface radialement extérieure (SRE) de la couche de travail la plus radialement extérieure (41) et la face de fond (243) des rainures majeures (24) est au moins égale à 1 mm et au plus égale à 5 mm, préférentiellement au moins égale à 2 mm et au plus égale à 4 mm.

5. Pneumatique selon l'une quelconque des revendications précédentes, où au moins une rainure majeure (24) de la bande de roulement (2) comprenant au moins un témoin d'usure (7), **dans lequel** la distance radiale minimale (du) entre la surface radialement extérieure (SRE) de la couche la plus radialement extérieure de l'armature de sommet (3) et la surface de roulement (21) est au moins égale à la distance radiale (df) entre la surface de roulement (21) et le point (71) le plus radialement extérieur du témoin d'usure (7).

6. Pneumatique selon l'une quelconque des revendications précédentes **dans lequel** la distance radiale minimale (du) entre la surface radialement extérieure (SRE) de la couche la plus radialement extérieure de l'armature de sommet (3) et la surface de roulement (21) est au moins égale à la profondeur D de la rainure majeure (24) la plus proche diminuée de 2 mm.

7. Pneumatique selon l'une quelconque des revendications précédentes **dans lequel** la profondeur D d'une rainure majeure (24) est au moins égale à 6 mm, et au plus égale à 20 mm, préférentiellement au plus égale à 10 mm.

8. Pneumatique selon l'une quelconque des revendications précédentes **dans lequel** la couche d'éléments de renforcement la plus radialement extérieure de l'armature de sommet (3) comprend des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

9. Pneumatique, selon l'une quelconque des revendications précédentes **dans lequel** au moins une gomme de bourrage (6) ayant une épaisseur radiale au moins égale à 0.3 mm, est positionnée à l'aplomb de l'ondulation (412) de la couche de travail (41) la plus radialement extérieure.

10. Pneumatique selon la revendication précédente, la bande de roulement (2) étant constituée par un mélange caoutchouteux, **dans lequel** la gomme de bourrage (6) est un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du matériau caoutchouteux constitutif de la bande de roulement (2), mesurée à une température de 10°C et sous une contrainte de 0.7 MPa à 10 Hz.

11. Pneumatique selon l'une quelconque des revendications précédentes **dans lequel,** l'armature de sommet consiste en 2 nappes de travail ayant des angles opposés et une nappe de frettage.

## Patentansprüche

1. Reifen (1), der Folgendes beinhaltet:
• eine Lauffläche (2), die dazu bestimmt ist, über eine Laufoberfläche (21), die Nuten (24) beinhaltet, mit einem Boden in Kontakt zu kommen,
• eine Nut (24), die einen Raum bildet, der in der Laufoberfläche (21) mündet und durch zwei Hauptseitenflächen (241, 242) begrenzt wird, die durch eine Bodenfläche (243) verbunden sind,
• eine Nut (24), die eine Breite W, die durch den mittleren Abstand zwischen den zwei Seitenflächen (241, 242) definiert wird, und eine Tiefe D, die durch den maximalen radialen Abstand zwischen der Laufoberfläche (21) und der Bodenfläche (243) definiert wird, aufweist,
• mindestens eine als Hauptnut bezeichnete Nut (24), die eine Breite W mindestens gleich 1 mm und eine Tiefe D mindestens gleich 4 mm aufweist,
• wobei der Reifen (1) ferner eine zu der Lauffläche (2) radial innen liegende Scheitelbewehrung (3) beinhaltet, die eine Arbeitsbewehrung (4) beinhaltet,
• wobei die Arbeitsbewehrung (4) mindestens eine Arbeitsschicht (41, 42) beinhaltet, wobei die mindestens eine Arbeitsschicht (41, 42) eine Arbeitsschicht (41) beinhaltet, die radial am weitesten außen liegt (41),
• wobei sich die radial am weitesten außen liegende Arbeitsschicht (41) radial von einer radial innen liegenden Oberfläche bis zu einer radial außen liegenden Oberfläche (SRE) erstreckt,
• wobei die radial am weitesten außen liegende Arbeitsschicht (41) Verstärkungselemente (411) beinhaltet, die von einem axial außen liegenden Rand der Arbeitsschicht zu dem entgegengesetzten axial außen liegenden Rand durchgehend sind, die mindestens teilweise metallisch sind, die von einem Elastomermaterial umhüllt sind, die untereinander parallel sind und die mit der Umfangsrichtung (XX') des Reifens einen gerichteten Winkel bilden, dessen Absolutwert mindestens gleich 15° und höchstens gleich 50° ist, wobei die radial am weitesten außen liegende Arbeitsschicht (41) mindestens eine Wölbung (412) beinhaltet, wobei die mindestens eine Wölbung (412) der radial am weitesten außen liegenden Arbeitsschicht (41) derart ist, dass der Abschnitt der Arbeitsschicht (41) der Wölbung (412) zu den Punkten der Arbeitsschicht (41) lotrecht zu dem Mittelpunkt der Bodenfläche (243) der Hauptnut (24), die der Wölbung (412) am nächsten ist, radial außen liegend ist,
**dadurch gekennzeichnet,**
**dass** die mindestens eine Wölbung (412) der radial am weitesten außen liegenden Arbeitsschicht (41) derart ist, dass auf mindestens 10 % der radial außen liegenden Oberfläche (SRE) der Arbeitsschicht (41) der radiale Abstand (do) zwischen der radial außen liegenden Oberfläche (SRE) der radial am weitesten außen liegenden Arbeitsschicht (41) und der Laufoberfläche (21) mindestens 1 mm kleiner ist als der radiale Abstand (dc) zwischen der radial außen liegenden Oberfläche (SRE) der radial am weitesten außen liegenden Arbeitsschicht (41) und der Laufoberfläche (21), Abstand lotrecht zu dem Mittelpunkt der Bodenfläche (243) der Hauptnut (24), die der Wölbung (412) am nächsten ist,
**und dass** der minimale radiale Abstand (du) zwischen der radial außen liegenden Oberfläche (SRE) der radial am weitesten außen liegenden Schicht der Scheitelbewehrung (3) und der Laufoberfläche (21) höchstens gleich der Tiefe D der am nächsten liegenden Hauptnut (24), erhöht um 2 mm, ist.

2. Reifen nach Anspruch 1, **wobei** auf mindestens 10 %, vorzugsweise mindestens 20 % und höchstens 85 % der radial außen liegenden Oberfläche (SRE) der radial am weitesten außen liegenden Arbeitsschicht (41) der radiale Abstand (do) zwischen der radial außen liegenden Oberfläche (SRE) der radial am weitesten außen liegenden Arbeitsschicht (41) und der Laufoberfläche (21) mindestens 1,5 mm, vorzugsweise 2 mm kleiner ist als der radiale Abstand (dc) zwischen der radial außen liegenden Oberfläche (SRE) der radial am weitesten außen liegenden Arbeitsschicht (41) und der Laufoberfläche (21), Abstand lotrecht zu dem Mittelpunkt der Bodenfläche (243) der Hauptnut (24), die der Wölbung (412) am nächsten ist.

3. Reifen nach einem der vorhergehenden Ansprüche, **wobei** auf mindestens 10 %, vorzugsweise mindestens 20 % und höchstens 85 % der radial außen liegenden Oberfläche (SRE) der radial am weitesten außen liegenden Arbeitsschicht (41) der radiale Abstand (do) zwischen der radial außen liegenden Oberfläche (SRE) der radial am weitesten außen liegenden Arbeitsschicht (41) und der Laufoberfläche (21) höchstens 5 mm, vorzugsweise höchstens 3 mm kleiner ist als der radiale Abstand (dc) zwischen der radial außen liegenden Oberfläche (SRE) der radial am weitesten außen liegenden Arbeitsschicht (41) und der Laufoberfläche (21), Abstand lotrecht zu dem Mittelpunkt der Bodenfläche (243) der Hauptnut (24), die der Wölbung (412) am nächsten ist.

4. Reifen nach einem der vorhergehenden Ansprüche, wobei der radiale Abstand (d1) zwischen der radial außen liegenden Oberfläche (SRE) der radial am weitesten außen liegenden Arbeitsschicht (41) und der Bodenfläche (243) der Hauptnuten (24) mindestens gleich 1 mm und höchstens gleich 5 mm, vorzugsweise mindestens gleich 2 mm und höchstens gleich 4 mm ist.

5. Reifen nach einem der vorhergehenden Ansprüche, wobei mindestens eine Hauptnut (24) der Lauffläche (2) mindestens einen Verschleißanzeiger (7) beinhaltet, **wobei** der minimale radiale Abstand (du) zwischen der radial außen liegenden Oberfläche (SRE) der radial am weitesten außen liegenden Schicht der Scheitelbewehrung (3) und der Laufoberfläche (21) mindestens gleich dem radialen Abstand (df) zwischen der Laufoberfläche (21) und dem radial am weitesten außen liegenden Punkt (71) des Verschleißanzeigers (7) ist.

6. Reifen nach einem der vorhergehenden Ansprüche, **wobei** der minimale radiale Abstand (du) zwischen der radial außen liegenden Oberfläche (SRE) der radial am weitesten außen liegenden Schicht der Scheitelbewehrung (3) und der Laufoberfläche (21) mindestens gleich der Tiefe D der am nächsten liegenden Hauptnut (24), verringert um 2 mm, ist.

7. Reifen nach einem der vorhergehenden Ansprüche, **wobei** die Tiefe D einer Hauptnut (24) mindestens gleich 6 mm und höchstens gleich 20 mm, vorzugsweise höchstens gleich 10 mm ist.

8. Reifen nach einem der vorhergehenden Ansprüche, **wobei** die radial am weitesten außen liegende Verstärkungselementeschicht der Scheitelbewehrung (3) textile Verstärkungselemente, vorzugsweise vom Typ aliphatisches Polyamid, aromatisches Polyamid, Kombination aus aliphatischem Polyamid und aromatischem Polyamid, Polyethylenterephthalat oder Kunstseide, beinhaltet, die untereinander parallel sind und mit der Umfangsrichtung (XX') des Reifens einen Winkel B bilden, der als Absolutwert höchstens gleich 10° ist.

9. Reifen nach einem der vorhergehenden Ansprüche, **wobei** mindestens ein Füllgummi (6), das eine radiale Dicke von mindestens gleich 0,3 mm aufweist, lotrecht zu der Wölbung (412) der radial am weitesten außen liegenden Arbeitsschicht (41) angeordnet ist.

10. Reifen nach dem vorhergehenden Anspruch, wobei die Lauffläche (2) aus einer Kautschukmischung besteht, **wobei** das Füllgummi (6) eine Kautschukmischung ist, die einen dynamischen Verlustfaktor tanδ1, gemessen bei einer Temperatur von 10° C und unter einer Belastung von 0,7 MPa bei 10 Hz, von höchstens gleich und vorzugsweise kleiner als 30 % des dynamischen Verlustfaktors tanδ2 des Kautschukmaterials, aus dem die Lauffläche (2) besteht, gemessen bei einer Temperatur von 10° C und unter einer Belastung von 0,7 MPa bei 10 Hz, aufweist.

11. Reifen nach einem der vorhergehenden Ansprüche, **wobei** die Scheitelbewehrung aus 2 Arbeitslagen, die entgegengesetzte Winkel aufweisen, und einer Versteifungslage besteht.

## Claims

1. Tyre (1), comprising:
• a tread (2) which is intended to come into contact with the ground via a tread surface (21) comprising grooves (24),
• a groove (24) forming a space opening onto the tread surface (21) and being delimited by two main lateral faces (241, 242) connected by a bottom face (243),
• a groove (24) having a width W defined by the mean distance between the two lateral faces (241, 242) and a depth D defined by the maximum radial distance between the tread surface (21) and the bottom face (243),
• at least one groove (24), referred to as a major groove, having a width W at least equal to 1 mm and a depth D at least equal to 4 mm,
• the tyre (1) further comprising a crown reinforcement (3) radially on the inside of the tread (2), and comprising a working reinforcement (4),
• the working reinforcement (4) comprising at least one working layer (41, 42), said at least one working layer (41, 42) comprising a radially outermost working layer (41),
• the radially outermost working layer (41) extending radially from a radially inner surface to a radially outer surface (SRE),
• the radially outermost working layer (41) comprising reinforcing elements (411) which are continuous from one axially outer edge of the working layer to the opposite axially outer edge, at least partially made of metal coated in an elastomer material, mutually parallel and which with the circumferential direction (XX') of the tyre form an oriented angle the absolute value of which is at least equal to 15° and at most equal to 50°,
the radially outermost working layer (41) comprising at least one undulation (412),
the at least one undulation (412) in the radially outermost working layer (41) being such that the working layer (41) portion of the undulation (412) is radially on the outside of the points of the working layer (41) that are in line with the centre of the bottom face (243) of the major groove (24) closest to the said undulation (412),
**characterized in that** the at least one undulation (412) in the radially outermost working layer (41) is such that, over at least 10% of the radially outer surface (SRE) of the said working layer (41), the radial distance (do), between the radially outer surface (SRE) of the radially outermost working layer (41) and the tread surface (21), is at least 1 mm less than the radial distance (dc) between the radially outer surface (SRE) of the radially outermost working layer (41) and the tread surface (21), which is the distance in line with the centre of the bottom face (243) of the major groove (24) closest to the said undulation (412),
**and in that** the minimum radial distance (du) between the radially outer surface (SRE) of the radially outermost layer of the crown reinforcement (3) and the tread surface (21) is at most equal to the depth D of the closest major groove (24), increased by 2 mm.

2. Tyre according to Claim 1, **in which,** over at least 10%, preferably at least 20% and at most 85%, of the radially outer surface (SRE) of the radially outermost working layer (41), the radial distance (do) between the radially outer surface (SRE) of the radially outermost working layer (41) and the tread surface (21) is at least 1.5 mm, and preferably 2 mm, less than the radial distance (dc) between the radially outer surface (SRE) of the radially outermost working layer (41) and the tread surface (21), which is the distance in line with the centre of the bottom face (243) of the major groove (24) closest to the said undulation (412).

3. Tyre according to either one of the preceding claims, **in which,** over at least 10%, preferably at least 20% and at most 85%, of the radially outer surface (SRE) of the radially outermost working layer (41), the radial distance (do) between the radially outer surface (SRE) of the radially outermost working layer (41) and the tread surface (21) is at most 5 mm, and preferably at most 3 mm, less than the radial distance (dc) between the radially outer surface (SRE) of the radially outermost working layer (41) and the tread surface (21), which is the distance in line with the centre of the bottom face (243) of the major groove (24) closest to the said undulation (412).

4. Tyre according to any one of the preceding claims, **in which** the radial distance (d1) between the radially outer surface (SRE) of the radially outermost working layer (41) and the bottom face (243) of the major grooves (24) is at least equal to 1 mm and at most equal to 5 mm, preferably at least equal to 2 mm and at most equal to 4 mm.

5. Tyre according to any one of the preceding claims, where at least one major groove (24) of the tread (2) comprises at least one wear indicator (7), **in which** the minimum radial distance (du) between the radially outer surface (SRE) of the radially outermost layer of the crown reinforcement (3) and the tread surface (21) is at least equal to the radial distance (df) between the tread surface (21) and the radially outermost point of the wear indicator (7).

6. Tyre according to any one of the preceding claims, **in which** the minimum radial distance (du) between the radially outer surface (SRE) of the radially outermost layer of the crown reinforcement (3) and the tread surface (21) is at least equal to the depth D of the closest major groove (24), decreased by 2 mm.

7. Tyre according to any one of the preceding claims, **in which** the depth D of a major groove (24) is at least equal to 6 mm and at most equal to 20 mm, preferably at most equal to 10 mm.

8. Tyre according to any one of the preceding claims, **in which** the radially outermost layer of reinforcing elements of the crown reinforcement (3) comprises reinforcing elements made of textile, preferably of the aliphatic polyamide, aromatic polyamide type, of a type involving a combination of aliphatic polyamide and aromatic polyamide, of polyethylene terephthalate or of rayon type, which are mutually parallel and form, with the circumferential direction (XX') of the tyre, an angle B at most equal to 10°, in terms of absolute value.

9. Tyre according to any one of the preceding claims, in which at least one element of padding rubber (6), having a radial thickness at least equal to 0.3 mm, is positioned in line with the undulation (412) of the radially outermost working layer (41).

10. Tyre according to the preceding claim, the tread (2) being made up of a rubber compound, **in which** the element of padding rubber (6) is a rubber compound that has a dynamic loss tanδ1, measured at a temperature of 10°C and under a stress of 0.7 MPa at 10 Hz, at most equal to and preferably 30% less than the dynamic loss tanδ2 of the rubber material of which the tread (2) is made, measured at a temperature of 10°C and under a stress of 0.7 MPa at 10 Hz.

11. Tyre according to any one of the preceding claims, **in which** the crown reinforcement consists of 2 working plies of opposite angles and one hooping ply.
